# EUROPEAN PATENT SPECIFICATION

(11) **EP 1 829 834 B1**
(45) Date of publication and mention of the grant of the patent: **15.05.2013**
(21) Application number: 05793043.0
(22) Date of filing: 29.09.2005
(51) Int. Cl.: C03C 15/00, C09K 13/08, C09K 13/06

(54) **CHEMICAL PROCESS FOR OBTAINING ANTI-REFLECTIVE GLASS, COMPRISING IMMERSION IN AN ACID SOLUTION, FOR SIMULTANEOUS AND CONTINUOUS PRODUCTION**
CHEMISCHES VERFAHREN ZUR HERSTELLUNG VON ANTIREFLEKTIVEM GLAS MIT EINTAUCHEN IN EINE SÄURELÖSUNG FÜR DIE GLEICHZEITIGE UND KONTINUIERLICHE PRODUKTION
PROCEDE CHIMIQUE PERMETTANT D'OBTENIR UN VERRE ANTIREFLET PAR IMMERSION DANS UNE SOLUTION ACIDE AFIN DE METTRE EN OEUVRE UNE PRODUCTION SIMULTANEE ET CONTINUE

(30) Priority: 10.12.2004 MX GT04000019
(43) Date of publication of application: 05.09.2007
(73) Proprietor: Rendon Granados, Juan Luis, 38010 Celaya Guanajuato (MX)
(72) Inventor: Rendon Granados, Juan Luis, 38010 Celaya Guanajuato (MX)
(74) Representative: Temino Ceniceros, Ignacio
(86) International application number: PCT/MX2005/000086
(87) International publication number: WO 2006/062385

(56) References cited:
- WO-A1-01/90015
- CN-A- 1 357 781
- JP-A- 01 102 401
- US-A- 3 374 141
- US-A- 4 086 074
- US-A- 4 944 986
- US-A- 5 120 605
- US-A1- 2003 170 459

## Description

### DESCRIPTION

### FIELD OF INVENTION

To establish a production process for anti-reflective glass comprising an immersion in chemical solutions such that its efficiency is higher than the already known processes; such processes are referred in the background. Our process minimizes materials waste since treated glass sheets are commercially available of 180 cm x 160 cm, thus minimizing production costs due to a higher production and lower safety risks since there is no direct manipulation during processing; thus, obtaining a product that surpasses the current ones since the anti-reflective treatment is done on both sides of the glass sheet (tinned side and atmospheric side) simultaneously and continuously on several glass sheets and/or pieces at the same time. The acid solutions are always on the chemical solution containers that are coated with high density polyethylene sheets or polypropylene of 0.635 cm width that are resistant to acids that are used in the process, and the glass sheet containers that are used for transportation and immersion of the glass sheets and/or pieces are also coated with an accelerated thyxotropic polyester resin in conjunction with the catalyst methyl-ethyl-ketone peroxide in dimethyl phthalate at 50%; these coatings allow transportation and immersion of glass sheets for the different chemical products solutions.

### BACKGROUND AND SUMMARY OF THE INVENTION

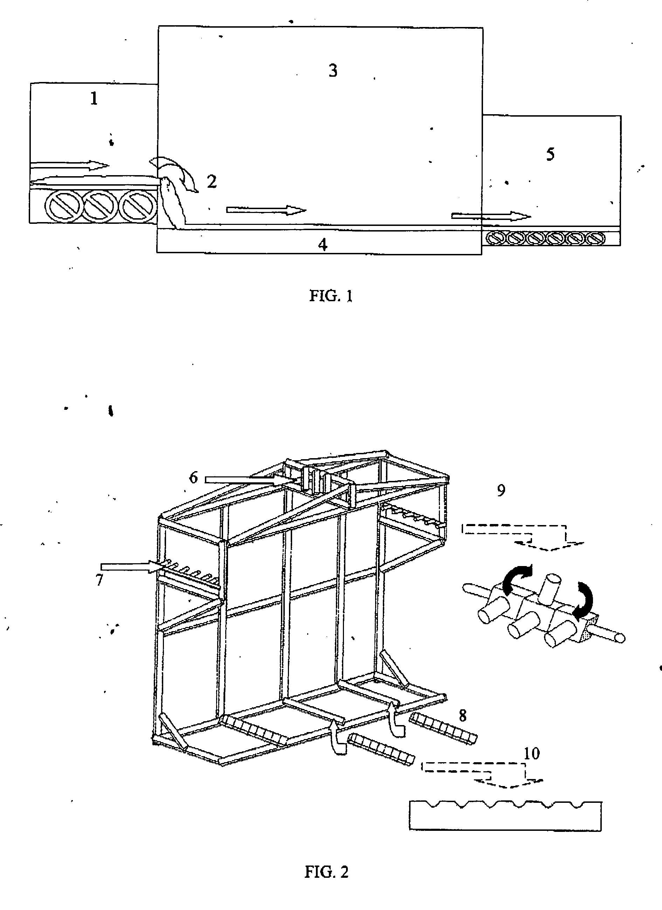

For obtaining products from float glass we have used sheets of flat float glass which are produced by flotation of melted glass on a bed of tin as shown in figure 1. Figure 1 shows a lateral view of this process of manufacture of float plane glass; this process comprises the raw materials that constitute the float glass are mixed previously before entering the melting furnace (1), where liquid glass is formed (2), this glass goes towards the tin bath (3) where the glass floats on the liquid tin bed (4) forming the sheet of glass with the required thickness, (5) then cooled for later cut according to the required dimensions. The glass sheets have two sides, one of them was in contact with liquid tin (tinned side) and the other one was in contact with the atmosphere (atmospheric side) in the melting furnace.

To date, the production of anti-reflective glass is performed by placing the glass piece on a table with the atmospheric side upward and putting a wax liner along the sides to place a paste or an acid solution to have an anti-reflective finish. The acid solution is contacted with the glass for a period of time and then finally washed to eliminate acid residues.

This already-known method for the production of one-side anti-reflective glass does not allow processing of large glass pieces; it only allows processing of one sheet at a time and on one side (atmospheric side). There is an associated handling risk and large materials waste. Because of this, there is a low productivity and high production costs in addition to health risks associated with acid handling producing a low-quality material. Also, this already-known process does not allow chemically-treating the tinned side since tin residues avoids chemical reaction with the acid solution.

In order to obtain higher production volumes, improve product quality and minimize physical, environmental and personnel risks this invention was thoroughly designed in order to protect it by the present patent. The immersion process and the formulation of the chemical solutions used in the production process of anti-reflective glass sheets are the main subjects of this invention.

### BRIEF DESCRIPTION OF THE ACCOMPANYING DRAWINGS

Figure 1. Lateral view of the production process for flat floated glass.
Figure 2. Isometric view of the glass pieces and/or sheets container.
Figure 3. Loading and unloading system for glass sheets.
Figure 4. Vertical loading of the glass sheets.
Figure 5. Angle-like loading of the glass sheets.
Figure 6. Horizontal loading of the glass sheets.
Figure 7. Loading and unloading of the glass sheets in the glass pieces and/or sheets container.
Figure 8. Glass pieces and/or sheets container with loaded glass.
Figure 9. Mirror finished side protection system.
Figure 10. Immersion process,
Figure 11. Gas washer (degassing).
Figure 12. Chemical solutions container.
Figure 13. Hydro pneumatic wash system.
Figure 14. High density polyethylene or polypropylene pneumatic pump.

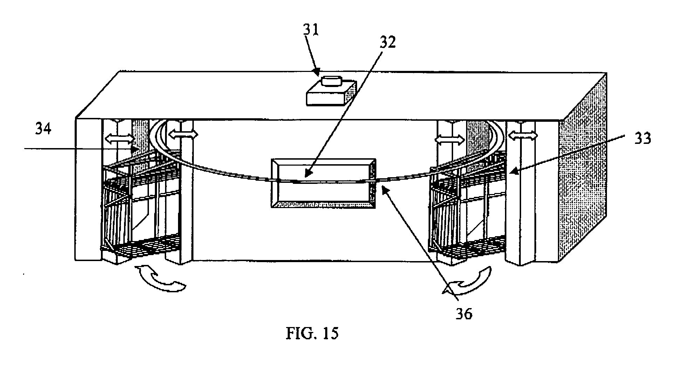

Figure 15. Continuous dryer "tunnel" type.

### DETAILED DESCRIPTION OF THE INVENTION

The present patent is intended to protect a chemical process for producing glass with an anti-reflective finish, comprising immersion in an acid solution, for simultaneous and continuous production of one or several glass pieces and/or sheets with varying dimensions, thicknesses, colors, standard uses and applications; such anti-reflective glass may be treated on both sides in the production process. The produced glass of the present process and its characteristics, in addition to the equipment, accessories, and materials specially designed for this process is described below.

The chemical process for obtaining glass with anti-reflective finish in an acid solution for continuous and simultaneous production of one or several glass pieces and/or sheets with dimensions, widths, colors, standard uses and applications has the following stages:
a) reception of glass pieces and/or sheets,
b) loading of the glass pieces and/or sheets into the glass containers,
c) processing of the glass pieces and/or sheets by immersion in acid solution,
d) drying of the glass pieces and/or sheets,
e) unloading of the glass pieces and/or sheets from its containers.

### a) Reception of the glass pieces and/or sheets

A stock of glass pieces and/or sheets is received in specially designed trucks. An adapted crane is used to unload the truck; this "bridge" type crane has 3 tons in capacity, 15 meters in width, 20 meters in length and 5 meters in height; it has a microelevation speed of 0.5 meters per minute, elevation speed is variable from 0.5 meters per minute to 5.2 meters per minute; also a motor reducer speed is variable from 5.1 meters per minute to 15.4 meters per minute. The same "bridge" type crane is used for loading the packages of anti-reflective glass on trucks, for delivering, distributing and transporting them. The crane used for loading and unloading allows fast processing of the glass. It is noteworthy that the absence of the above mentioned crane would increase operations time and associated costs. Also, physical risk for the personnel and the materials is minimized. Glass pieces and/or sheets are unloading from to the truck to be stored in special containers for further processing.

### b) Loading of the glass pieces and/or sheets into the glass containers

To convey glass pieces and/or sheets during the production process, a specially designed container is used to allow us fast processing of the glass on both sides (tinned side and atmospheric side) simultaneously. This way allows a higher production rate in contrast to the already-known traditional process; it also minimizes personnel risk since there is no direct manipulation. Glass pieces and/or sheets are vertically placed in the special container as shown in Figure 2 and by means of a chain-hoist; the glass is ready for the immersion process.

The specially-designed containers are made of rectangular tubular steel profile (ptr) of 2.54 centimeters of thickness and its unique design can hold static and dynamic stresses that are present during the production process. The glass pieces and/or sheets container has 180 centimeters in height, 180 centimeters in length and 39 centimeters in width; into the glass sheets can be collocated until 16 glass sheets of 1800 x 1600 x 2 millimeters (commercial dimension), but the container capacity can receive the sheets with any kind of thicknesses, dimensions and colors.

The lateral framework container has movable simple pivots (7) are made of polypropylene or high density polyethylene plate and bar, because they are resistant to the acid attack, each one of said pivots can turn on its axis, to put on vertical position for receiving the glass sheets, and soon happen pass to a horizontal position to maintain them (9). The superior position of container has 3 hooks to balance the container load and to hold said container onto traveling crane "bridge" type for transporting and immersing the glass sheets in to the solution containers; its gravity center was calculated for stabilizing totally the container. The inferior position of container has 3 supports (8) made of polypropylene or high density polyethylene plate resistant to acid attack; each support has 34 centimeter in length and 1.27 centimeters in height and they are grooved with 2.5 centimeters between separation of grooves in which the glass sheets are collocated in vertical form.

The glass pieces and/or sheets container resist the chemical treatment by having a covering with an accelerated thyxotropic polyester resin in conjunction with the catalyst methyl-ethyl-ketone peroxide in dimethyl ftalate at 50%,

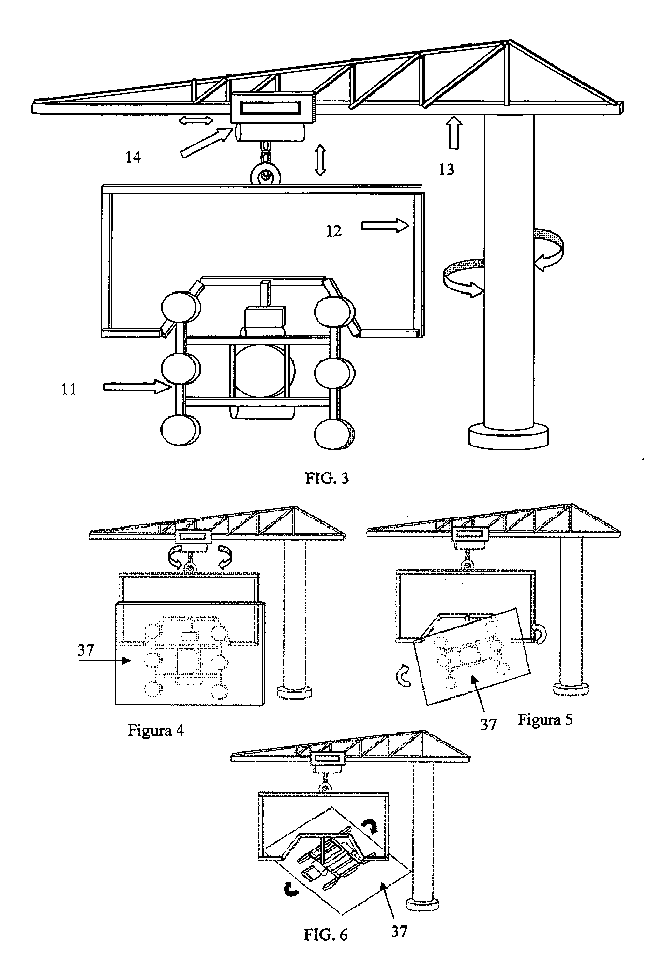

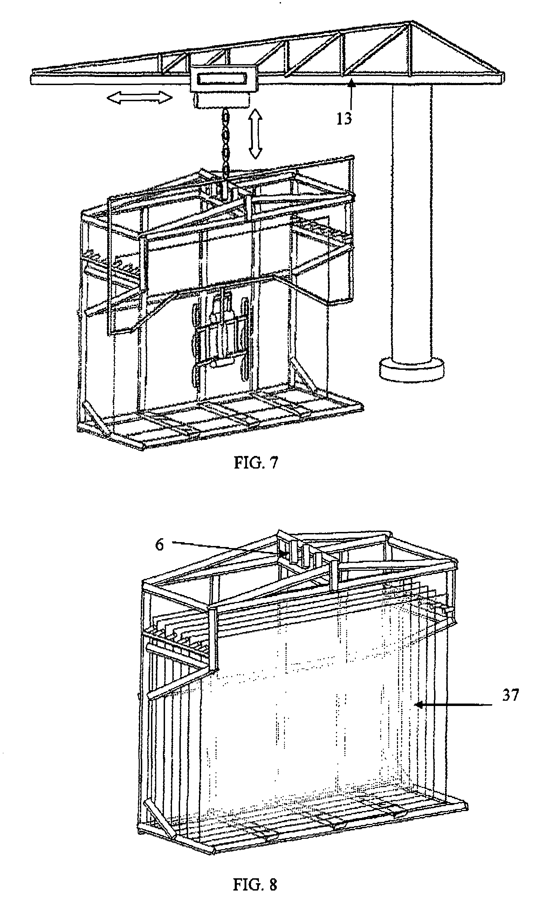

The load of glass pieces and/or sheets is storage into the trestle, by manual or pneumatic way. The pneumatic way consists of 6 pneumatic cupping glasses connected to a vacuum pump of ¼ of H.P. with capacity until 500 kilograms (11), the cupping are located on framework specially designed to permit it entrance to the container (12), said cupping system has flexible movements due to turn 360° since they are placed to an endless bullet mold by means of a cable to the chain-hoist (14); said chain-hoist is in the riel of "flag" type crane (13), this cupping system is versatile because take the glass sheets in vertical form (figure 2), horizontal form (figure 6), or any ankle (figure 5), and runs in both directions from one side to another to take or to deposit the glass sheets by means the riel (13) to collocate said sheets into container (figure7).

The crane enlistment the container once the container (6) is loaded with the glass sheets, and is ready for the process (figure 8)

Approximately, we process 230 Kg per container in 15 minutes, it means 184 meters² of glass sheets of 2 mm of thickness per hour, this capacity may be increased according to production necessities.

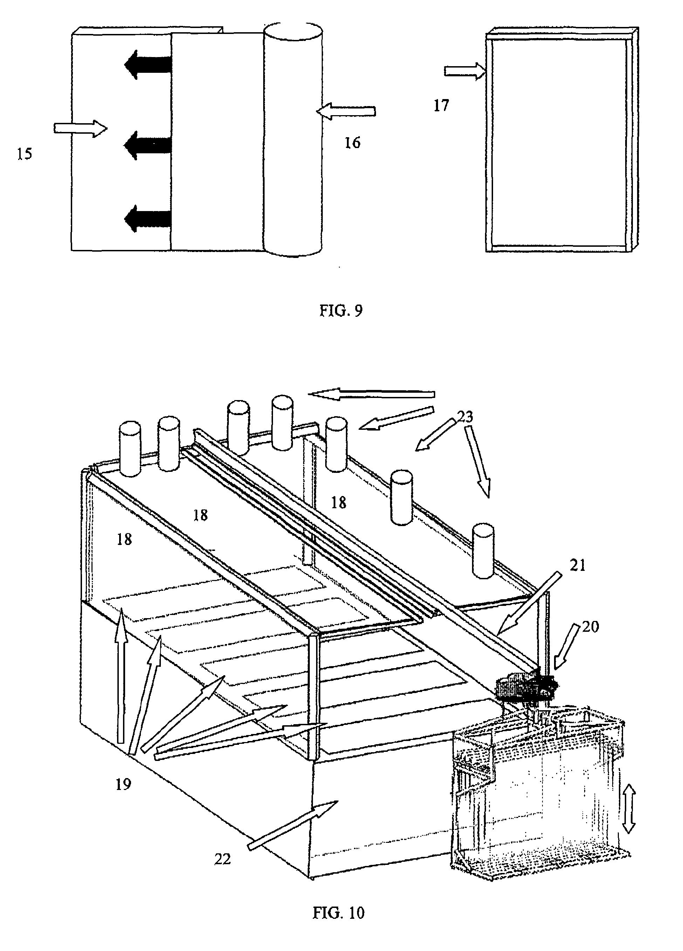

This container may be process pieces or sheets with different dimensions, colors, thicknesses, by both sides (atmospheric side and tinned side) including mirror sheets simultaneously; the figure 9 shows how we can protect the paint side in a mirror sheet (15), applying auto-adherible plastic resistant to acid attack film type (16) with U.V. protection, when the anti-reflective finish is made on one side of mirror sheets or float glass sheet we can join two mirror or float sheets or one side of mirror or float sheets can protected with an adhesive acrylic type on the paint side and re-forced the edges with special tape (17) used in air conditioning ducts.

### c) processing of the pieces and/or glass sheet by immersion in an acid solution

The chemical process for obtaining anti-reflective glass by immersion in an acid solution for simultaneous and continuous production, of one or several pieces and/or sheet of glass of dimensions, thicknesses, colors, uses and standard, special and variable applications (figure 10); it has had in sequence a series seven containers of chemical solutions (19) of 239 centimeters in length, 54 centimeters in width, 207 centimeters in depth these dimensions are adequate for collocating into the container the glass sheets, but the measures are changed depending on the production necessities.

All these containers of chemical solutions are isolated by means of an encapsulated system by means of a wall done of square tubular steel profile covered with polyethylene (18), with the purpose of avoiding the acid gas emanation increasing the security degree, preventing the equipment corrosion and splits of the solutions.

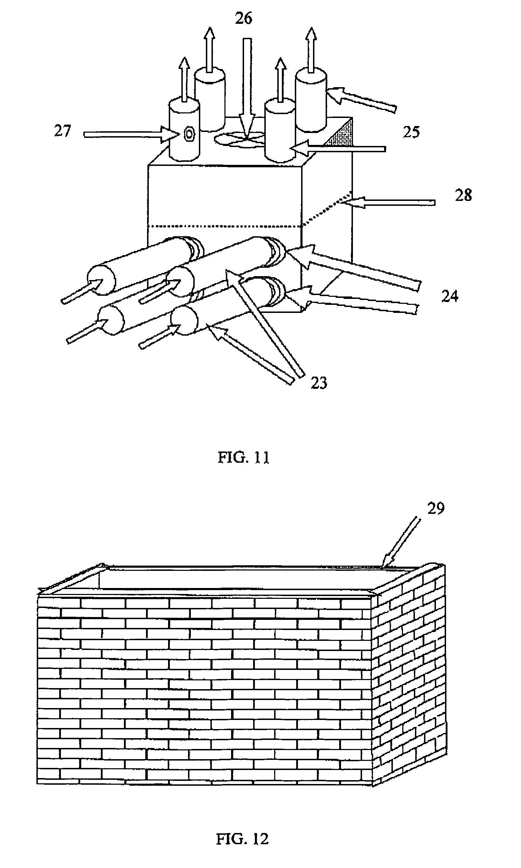

Said encapsulated system has the gas exit by means of eight extractors transporting the acid steam (23) towards the gas washers (figure 11), having an absorption and neutralization of these acid steam in a volume of 64000 cubic meters per hour in all system, both gases washing have four extractors towards gas washers (figure 11); this encapsulated system have perfect sealing by means of slide awing in the curtain that can automatic or manual form through a chain-hoist (20) with variable speed from 3 to 20 meters per minute and its optimal velocity is from 5.1 to 19.3 meters per minute, passing the glass container (figure 8) towards chemical solutions (19). When the glass container supported with the chain-hoist entrance and exit to encapsulated system, the awing curtain up or down slide by means of motor reducers of ⅛ H.P.

Said encapsulated system (18) has four extractors (24) of 800 cubic meters per hour each one, the gas are extracted and transported by ducts (23) toward gas washers (figure 11) neutralizing them with a solution of sodium hydroxide at 4% with a nominal volume of 220 liters (28); this extraction allows us to unload to the outer atmosphere a neutral and inert gas by the exit chimneys (25); said chimney has a gas sampling port (32) to evaluate the process analyzing it every 6 months according to the environmental Mexican norms (NOM 02). The capacity total of the washers is of 1000 liters. In order to renew and to maintain the level of the washing solution the system has an access floodgate (26).

Each chemical solution container (19) has a volume of 2700 liters for assuring the total glass covered when the immersion is made. Said solutions containers (19) have a system of agitation and movement with compressed air provided by a 135 compressor of psi of 30 amperes and 2.5 H.P. for homogenizing the solution and removing the accumulated remainders.

These chemical solutions containers are over the level of the floor (with 3 m in elevation) if is necessary a movable stair could be occupied; these seven containers are constructed of concrete armed with a double wall of partition or brick (figure 12); they were constructed calculating the support mechanical, static and dynamic efforts and pressures exerted on the walls and floor by the fluids contained within, its volume is 3000 liters with a security factor of 60%. The chemical solutions containers are covered with plate of polypropylene or high density polyethylene 0.635 cm. of thickness (29) that makes resistant to the acid attack because these materials are inert to used acids, allowing the storage of the solutions per prolonged time, included several decades.

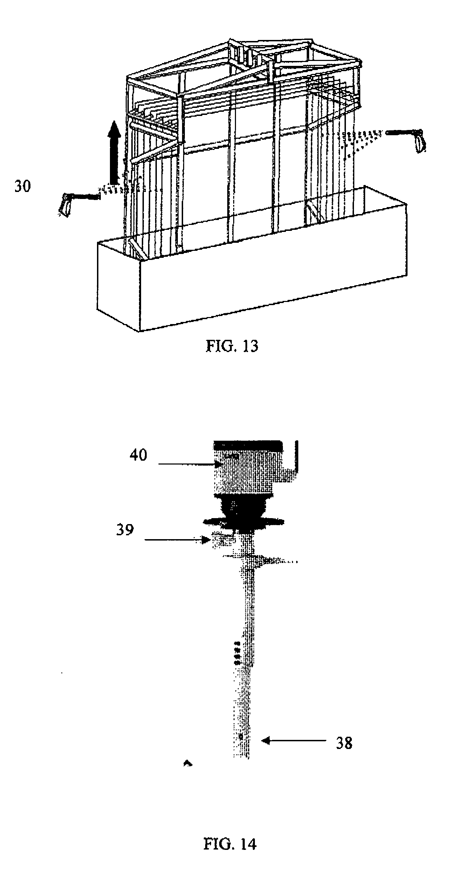

For the transport and immersion of the glass of pieces and/or sheet container, using a chain-hoist of 0.5 H.P. of variable speed for elevation and translation (3 meters per minute until 20 meters per minute), said chain-hoist has a capacity of 500 Kg and 6 meters of elevation (20), which run around the riel (21) for transporting the glass container toward the solutions container in the sequential manner by stages. The stages of the process are described following:
Step 1 in the immersion process. The first chemical solutions container has an acid solution prepared with 17% of hydrofluoric acid at 70%, 53% of hydrochloric acid at 30%, 23% of dextrose monohydrated sugar and 7% of ammonium bifluoride anhydrous. These components are mixed in this order; it is the optimal formulation, for the treatment for obtaining the anti-reflective finish; the reagent time is at least by one hour. The concentration can have the following range: from 12% to 22%, 48% to 58%, 17% to 28% and 5% to 13% respectively, without affecting the process. It is necessary to monitor its concentration, its acidity is between 14 a 19 miliequivalents per liter, its electrical conductivity is from 900,000 to 2,100,000 microhms, the reagent time is form 20 to 185 seconds, the immersion velocity can be from 5.1 to 19.3 meters per minute, the parameters vary depending on glass type, and thickness; in this container the finish anti-reflective is made.
Step 2 in the immersion process.- The second container has current water for rising the glass pieces and/or sheets eliminating the acid residues. This container must be has the following parameter: electrical conductivity until 400,000 microhms.
Step 3 in the immersion process.- The third chemical solution container has a neutralizing solution prepared with sodium hydroxide at 4%; said container must be has the following parameters: pH 7.5, the electrical conductivity is until 400,000 microhms and the reagent time of immersion is from 30 to 180 seconds depending on the pH, because the reaction must be stopped.
Step 4 in the immersion process.- The forth chemical solution container has current water for rising the glass pieces and sheets for eliminating the acid residues and the residues of neutralizing solution. This container has the following parameters: electrical conductivity until 100,000 microhms for assurance the treatment. This container has a hydro-washing system by sprinkling deionized water less than 10 microhms, with automatic or manual way at 3000 pressure pounds of 5 H.P. (figure 13). When the glass container is leaving the solutions container the deionized water is sprinkled by hydro-washing system.
Step 5 in the immersion process.- The fifth chemical solution container has a washer solution prepared with deionized water (less than 10 microhms) that for its electrical conductivity eliminate the acid residues and residues of neutralizing solution, guarantee the safety use of the anti-reflective glass.

The sixth and seventh chemical solution containers must be ready for any eventuality during the process.

We have a tank covered with high density polyethylene with automatic shaking or manual for preparing the solutions used during the process; its capacity is of 1100 liters however must be increasing it according to production necessities. The raw material is deposited into the tank and when the solution is ready it pass to its containers by means of special pumps covered with polypropylene, PVC, or high density polyethylene; as is shown in the figure 14.

For raising deionized water used during the process we have a special equipment that deionized water by ionic interchange (cationic-anionic) with a flux to 22.7 liters per minute, however it could be increasing it.

### d) Drying of the glass pieces and/or glass

After chemical processing, the anti-reflective glass pieces and/or sheet are passed from its container to a continuous dryer "tunnel" type; said continuous dryer is specially designed in function of our necessities (34) which consists of a motor reducer pf 2H.P. for traction and transport the glass pieces container from its entrance to its exit; it can be a heating system by means of L.P. gas, natural gas and/or electrical resistance with internal ventilation; the temperature process and velocity are variable; its temperature at work is from 35 to 60°C, and the time dried is fro 2 to 3.5 hours depending of the production. The capacity of continuous dryer is for 9 glass sheets containers, it means 2100 Kg of glass. This dryer permit to increase the process productivity and efficiency due to the humidity marks are diminished. The ceiling dryer has a humidity extractor (31), also has a window (32) to watch the dried process, its entrance and its exit are sealed through slide doors. The dryer has a transport riel (36) wherein the containers are hanged.

The drying of the anti-reflective glass pieces and/or sheets also can become at room temperature by means of a vertical or horizontal washing-dryer machine, including conditions at room temperature.

### e) Unloading of the glass pieces and/or sheet from its containers

Once dried the anti-reflective glass pieces are transported toward the trestle for delivering and distributing them. The unloading of the anti-reflective glass from its containers can be by means of cupping pneumatic system whose 6 cupping are connected to a vacuum pump of ¼ H.P. which is comprised in the system of crane "flag" type (figure 3), with capacity of up to 500 kilograms according to the production necessities.

For monitoring, sampling, analyzing and controlling the parameters established, each chemical solution container has a laboratory equipped support fully process, with the following equipment: conduct-meters of different scales depending on the solutions, electronic and manual potentiometers and lab material

Using this chemical process by immersion for treatment total or partial glass with anti-reflective finish by immersion in acid solution for simultaneous and continuous production of one or several pieces and/or sheet of glass of dimensions, thicknesses, colors, uses and standard, special and variable applications, the process is optimized reutilizing the waste materials; it allows to have a high volume of production because anti-reflective one or several pieces and/or sheets is produced on one or both side of the float glass; indistinct manner. The process diminished the risks to acid manipulation because the personnel have been trained about dangerous of the acid solutions, how combat the fire and residues, besides each stage is carefully made, mainly by using an encapsulated system to protect the solutions containers avoiding the acid gas emanation. For example, the water process is discharged with previously neutralization, avoiding all kind of risk.

The process established in this request is highly better than the already-known process, for example the traditional process only anti-reflective the atmospheric side and the finishes is not homogeneous because the experience of operator to applicant the past or solutions is critical; in contrast our process the finished is higher homogeneous and it can be on one or both sides included tinned side.

All and each stages of process are made at room temperature, at atmospheric pressure and relative humidity except the furnace "tunnel" type.

## Claims

1. Chemical process for obtaining float glass with an anti-reflective finish, comprising an immersion in an acid solution, for simultaneous and continuous production of total or partial sheets of glass producing one or several pieces of glass with different dimensions, thicknesses, colors, standard uses and applications; said sheets of glass may be treated on the atmospheric or tin side or on both sides, consisting of
a) reception of the pieces or thin sheets of glass
b) loading containers with the pieces or thin sheets of glass
c) processing the pieces or thin sheets of glass by immersing in an acid solution at a rate of from 5.1 to 19.3 meters per minute and a duration of from 20 to 185 seconds consisting of treating the pieces of glass sequentially with the following solutions:
I. a washing and cleaning solution
II. an acid solution, wherein the acid solution contains:
i. from 12% to 22% of hydrofluoric acid a 70%,
ii. from 48% to 58% of hydrochloric acid at 30%,
iii. from 5% to 25% of dextrose monohydrate sugar,
iv. from 5% to 13% of ammonium bifluoride anhydrous,
the acid solution giving an acidity of 14 to 19 milliequivalents per liter, and an electrical conductivity from 900.000 to 2,100,000 microhms providing an optimal formulation for a chemical reaction on the surface of the glass to obtain an anti-reflective finish
III. a washing for rinsing solution whereby the glass items are immersed in a current of water for eliminating any acid residues and residues of neutralized solution prepared with sodium hydroxide at 4%.
IV. an acidified wash stop solution
V. a further washing for rinsing solution
VI. and a wash solution whereby the glass is first immersed and then sprinkled with deionized water
d) drying the pieces or thin sheets of glass
e) unloading the pieces or thin sheets of glass from the containers.

## Patentansprüche

1. Chemisches Verfahren zur Herstellung von Floatglas mit entspiegeltem Finish, wobei es das Eintauchen in eine Säurelösung umfasst, für die gleichzeitige und fortlaufende Herstellung von Platten, die ganz oder teilweise aus Glas bestehen, durch die Herstellung von einem oder mehreren Stücken aus Glas mit verschiedenen Abmessungen, Stärken, Farben, herkömmlicher Verwendungen und Anwendungen; diese Glasplatten können auf der Luftseite oder Zinnbadseite oder auf beiden Seiten behandelt werden, wobei das Verfahren folgende Schritte umfasst:
a) Übernahme der dünnen Glasstücke oder -platten;
b) Laden der dünnen Glasstücke oder -platten in den Behältern;
c) Bearbeitung der dünnen Glasstücke oder -platten durch Eintauchen in eine Säurelösung mit einer Eintauchgeschwindigkeit von 5,1 bis 19,3 Metern pro Minute und einer Dauer von 20 bis 185 Sekunden, wobei die Glasstücke nacheinander mit den folgenden Lösungen behandelt werden:
I. einer Wasch- und Reinigungslösung;
II. einer Säurelösung, bestehend aus:
i. 12% bis 22% 70%ige Fluorwasserstoffsäure;
ii. 48% bis 58% 30%ige Chlorwasserstoffsäure;
iii. 5% bis 25% Traubenzucker, Dextrose Monohydrat;
iv. 5% bis 13% wasserfreies Ammoniumbifluorid,
wobei die Säurelösung einen Säuregehalt von 14 bis 19 Milliäquivalenten pro Liter bewirkt und eine elektrische Leitfähigkeit von 900.000 bis 2.100.000 Mikroohm, weshalb hier eine optimale Formulierung erhalten wird, für eine chemische Reaktion auf der Glasoberfläche, um ein entspiegeltes Finish zu erhalten;
III. eine Wasch- oder Spüllösung, weshalb die Glaselemente in laufendes Wasser getaucht werden, um sämtliche Säurereste und Reste der neutralisierten Lösung, die mit 4%igem Natriumhydroxid hergestellt wurde, zu entfernen;
IV. eine gesäuerte Stopplösung zum Unterbrechen des Waschvorgangs;
V. eine zusätzliche Wasch- und Spüllösung;
VI. und eine Waschlösung, in die das Glas zunächst eingetaucht wird und danach mit deionisiertem Wasser abgespritzt wird;
d) Trocknen der dünnen Glasstücke oder -platten;
e) Entladen der dünnen Glasstücke oder -platten aus den Behältern.

## Revendications

1. Processus chimique pour obtenir du verre flotté avec une finition anti-réfléchissante qui inclut une immersion dans une solution d'acide, pour la production simultanée et continue de lames totales ou partielles en verre, produisant une ou plusieurs pièces en verre à plusieurs épaisseurs, couleurs, utilisations et applications conventionnelles ; ces lames en verre peuvent être traitées sur la face atmosphérique ou étamée ou sur les deux faces et consiste en:
a) la réception de pièces ou de lames fines en verre;
b) le chargement des récipients avec les pièces ou lames fines en verre;
c) le traitement des pièces ou lames fines en verre en les immergeant dans une solution d'acide à une vitesse comprise entre 5,1 et 19,3 mètres par minute et avec une durée de 20 à 185 secondes qui consiste au traitement des pièces en verre de façon séquentielle avec les solutions suivantes:
I. une solution de lavage et de nettoyage;
II. une solution d'acide contenant:
i. 12% à 22% d'acide fluorhydrique à 70%;
ii. 48% à 58% d'acide chlorhydrique à 30%;
iii. 5% à 25% de sucre dextrose monohydrate;
iv. 5% à 13% de bifluorure d'ammonium anhydre,
la solution d'acide présente une acidité de 14 à 19 milliéquivalents par litre et une conductivité électrique de 900.000 à 2.100.000 microhms qui fournit une formulation optimale pour une réaction chimique sur la surface du verre afin d'obtenir une finition anti-réfléchissante;
III. une solution de lavage ou rinçage où les éléments en verre sont immergés dans un courant d'eau afin d'éliminer tout déchet d'acide et déchet de solution neutralisée préparée avec de l'hydroxyde de sodium à 4%;
IV. une solution de lavage chélateuse et acidifiée;
V. une solution additionnelle de lavage ou de rinçage;
VI. et une solution de lavage où le verre est immergé en premier lieu et aspergé par la suite avec de l'eau désionisée;
d) séchage des pièces ou des lames fines en verre;
e) déchargement des pièces ou lames fines en verre des récipients.
